# EUROPÄISCHE PATENTSCHRIFT

(11) **EP 3 623 323 B1**
(45) Veröffentlichungstag und Bekanntmachung des Hinweises auf die Patenterteilung: **25.09.2024**
(21) Anmeldenummer: 19179990.7
(22) Anmeldetag: 13.06.2019
(51) Int. Cl.: B65G 47/08, B65G 47/24, B65G 47/31

(54) **VERFAHREN UND VORRICHTUNG ZUR HANDHABUNG VON STÜCKGÜTERN, ARTIKELN UND/ODER GEBINDEN**
METHOD AND DEVICE FOR HANDLING PIECES, ARTICLES AND/OR CONTAINERS
PROCÉDÉ ET DISPOSITIF DE MANIPULATION DES MARCHANDISES, DES ARTICLES ET / OU DES EMBALLAGES

(30) Priorität: 11.09.2018 DE 102018122081
(43) Veröffentlichungstag der Anmeldung: 18.03.2020
(73) Patentinhaber: KRONES Aktiengesellschaft, 93073 Neutraubling (DE)
(72) Erfinder: KOLLMUSS, Manuel, 93073 Neutraubling (DE); MEHDI, Arsalan, 93073 Neutraubling (DE); SCHWALB, Felix, 93073 Neutraubling (DE); ASTNER, Michael, 93073 Neutraubling (DE); WESTERMEIER, Christian, 93073 Neutraubling (DE); GRIMM, Sebastian, 93073 Neutraubling (DE); EHBERGER, Marco, 93073 Neutraubling (DE); BEER, Erhard, 93073 Neutraubling (DE)
(74) Vertreter: Benninger, Johannes

(56) Entgegenhaltungen:
- EP-A1- 1 556 297
- EP-A1- 2 662 293
- EP-A1- 2 792 623
- EP-B1- 1 556 297
- DE-A1- 102008 055 471
- DE-A1- 102016 124 250
- DE-A1- 102016 206 650

## Beschreibung

Die vorliegende Erfindung betrifft ein Verfahren zur Handhabung von Stückgütern, Artikeln und/oder Gebinden zum Zwecke der Ausbildung von palettierfähigen Lagen mit den Merkmalen des unabhängigen Verfahrensanspruchs 1. Zudem betrifft die Erfindung eine Vorrichtung zur Handhabung von Stückgütern, Artikeln und/oder Gebinden mit den Merkmalen des Anspruchs 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen. Die solchermaßen gebildeten Lagen von in aller Regel gleichartigen Stückgütern, Paketen oder Gebinden können anschließend mehrfach übereinander gestapelt werden, bspw. auf hierfür vorbereiteten Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder um sog. Cluster handeln. Damit die erwähnten Paletten transportsicher sind, müssen die zusammengestellten Lagenbilder, die auch als zusammengestellte Takte bezeichnet werden können, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein in Förderrichtung nachgeordnetes Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut auf Grundlage eines Geschwindigkeitsunterschiedes zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor dem Rollenförderer oder erst auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Die Offenlegungsschrift EP 2 662 293 A1 beschreibt ein System zum Bilden einer Schicht von zu palettierenden Paketen. Hierbei werden die Pakete im letzten Förderabschnitt vor dem Gruppiermodul zusammengedrängt, so dass die Pakete jeweils im Wesentlichen lückenlos in das Gruppiermodul einlaufen. Anschließend ist eine Taktbildung vorgesehen. Hierfür umfasst das System ein Tor zum Dosieren der ankommenden Pakete. Die derart gebildeten Takte werden nachfolgend durch einen geeigneten Manipulator gehandhabt, der insbesondere die vorab gebildete Pakettakte erfasst.

Die Offenlegungsschrift DE 10 2016 124 250 A1 beschreibt eine Vorrichtung gemäß dem Oberbegriff des Vorrichtungsanspruchs 10 und ein Verfahren gemäß dem Oberbegriff des Verfahrensanspruchs 1 zum Umgang mit bewegten Stückgütern. Hierbei erfasst der Manipulator Takte von Stückgütern von der zuführenden geschlossenen und/oder lückenlosen Formation und trennt diese räumlich ab.

Die Aufgabe der Erfindung besteht darin, ein Verfahren und eine Vorrichtung zur Handhabung von Stückgütern, Artikeln und/oder Gebinden bereitzustellen, die einen erhöhten Durchsatz gegenüber bekannten Verfahren und Vorrichtungen zur Lagenbildung aufweisen und dabei insbesondere prozesssicher und möglichst fehlerfrei arbeiten.

Diese Aufgabe wird mit den Gegenständen der unabhängigen Ansprüche, d.h. durch ein Verfahren und eine Vorrichtung zur Handhabung von Stückgütern, Artikeln und/oder Gebinden erreicht, welche die Merkmale der unabhängigen Patentansprüche umfassen. Merkmale vorteilhafter Weiterbildungen der Erfindung ergeben sich aus den jeweiligen abhängigen Ansprüchen.

Die Erfindung betrifft ein Verfahren und eine Vorrichtung zur Handhabung von Stückgütern, Artikeln und/oder Gebinden zum Zwecke der Ausbildung von aus jeweils mehreren Stückgütern Artikeln und/oder Gebinden bestehenden palettierfähigen Lagen.

Das vermittels der Vorrichtung durchführbare Verfahren sieht vor, dass in mehreren aufeinanderfolgenden Verfahrensschritten zur Ausbildung einer palettierfähigen Lage jeweils Takte, umfassend jeweils mindesten ein Stückgut, in eine relative Zielposition und/oder Zielausrichtung innerhalb eines Gruppiermoduls verbracht werden, wobei die Stückgüter relativ zueinander in eine Anordnung gebracht werden, die im Wesentlichen der Anordnung der jeweiligen Stückgüter innerhalb der auszubildenden palettierfähigen Lage entspricht.

Es sei an dieser Stelle somit klargestellt, dass der Begriff des Taktes, der im vorliegenden Zusammenhang zur Definition der erfindungsgemäßen Verfahrensschritte verwendet wird, nicht zwingend eine gesamte Lage meint, sondern vielmehr zur Charakterisierung einer gleichzeitig mittels Manipulator oder Greiferkopf o. dgl. innerhalb eines Gruppiermoduls greifbaren oder erfassbaren Artikel-, Stückgut- oder Gebindegruppierung herangezogen wird. Damit wird gleichzeitig deutlich, dass der Begriff des Taktes zumindest ein einzelnes Stückgut, einen einzelnen Artikel oder ein einzelnes Gebinde meinen kann, denn der im Gruppiermodul befindliche Manipulator, Greiferkopf o. dgl. Greifeinrichtung kann in einem Zug mehrere Stückgüter, Artikel oder Gebinde, wahlweise jedoch auch nur ein einziges Stückgut, einen Artikel oder ein einzelnes Gebinde greifen oder erfassen, um es zu verschieben und/oder zu drehen und in eine gewünschte Zielposition des angestrebten Lagenbildes zu verbringen.

Nachfolgend wird zumeist generell von Stückgütern gesprochen. Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in mindestens einer Reihe hintereinander bewegten Stückgüter können dabei je nach Anforderung von nachfolgenden Handhabungsvorrichtungen gleich oder unterschiedlich ausgebildet sein.

Die Vorrichtung umfasst mindestens eine Transporteinrichtung zur ein- oder mehrreihige Zuförderung der Stückgüter in einer Transportrichtung. Die in einer Reihe ohne Abstände oder mit minimalen Abständen bewegten und/oder zu einem - insbesondere Manipulationsbereich oder Erfassungsbereich oder Bewegungsraum genannten - Bereich beförderten, mindestens zwei unmittelbar aufeinanderfolgenden Stückgüter werden vorzugsweise als geschlossene Formation transportiert.

Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch als Endlos-Formation transportiert werden, die keine Unterbrechung aufweist und eine beliebige Anzahl von aufeinanderfolgend beförderten Stückgütern, Artikeln oder Gebinden umfasst.

Über die mindestens eine Transporteinrichtung werden die Stückgüter ein- oder mehrreihig in jeweils geschlossener und/oder lückenloser Formation zu einem Gruppiermodul mit wenigstens einer Horizontalfördereinrichtung sowie mindestens einem Manipulator für die Stückgüter transportiert. Der Manipulator erfasst jeweils einen Takt, umfassend mindestens ein in seinen Erfassungsbereich eingelaufenes Stückgut, und bringt diesen Takt jeweils durch Drehen und/oder Verschieben und/oder Heben in eine definierte Zielposition und/oder Zielausrichtung gemäß der vorgegebenen Lagenanordnung. Dabei entsteht eine sogenannte vorbereitete palettierfähige Lage, bei der noch Lücken zwischen den die einzelnen Takte bildenden Stückgütern vorhanden sein können. Diese Lücken müssen vor dem eigentlichen Palettierschritt noch entfernt werden, beispielsweise vermittels einer nachgeordneten Vorgruppierung.

Das Verfahren zur Ausbildung einer jeweiligen palettierfähigen Lage sieht mindestens einen Verfahrensschritt vor, bei dem der Manipulator einen ersten Takt, umfassend mindestens ein Stückgut, von der über die Transporteinrichtung in das Gruppiermodul einlaufenden Formation klemmend und/oder kraft- und/oder formschlüssig erfasst, von der Formation räumlich abtrennt und in eine erste definierte relative Zielposition und/oder Zielausrichtung gegenüber den nachfolgenden Stückgütern der Formation verbringt.

Weiterhin ist mindestens ein weiterer Verfahrensschritt vorgesehen, bei dem innerhalb des Gruppiermoduls ein von den nachfolgenden Stückgütern der Formation beabstandeter zweiter Takt, umfassend mindestens ein Stückgut, gebildet wird. In einem daran anschließenden Verfahrensschritt wird dieser zweite Takt oder das mindestens eine Stückgut, das diesen Takt bilden kann, durch den Manipulator erfasst und in eine zweite definierte relative Zielposition und/oder Zielausrichtung innerhalb des Gruppiermoduls verbracht.

Die hier dargestellte Reihenfolge der Ausbildung eines ersten Taktes und eines zweiten Taktes ist nicht zwangsläufig erfindungswesentlich, sondern insbesondere jeweils vom zu erstellenden Lagenschema abhängig. Es könnte beispielsweise auch zuerst innerhalb des Gruppiermoduls ein zweiter Takt von der Formation abgetrennt und vom Manipulator erfasst und in die entsprechende Zielposition und/oder Zielausrichtung verbracht werden und erst in einem späteren Verfahrensschritt ein erster Takt durch den Manipulator direkt von der Formation abgetrennt werden. Weiterhin kann vorgesehen sein, dass im Zuge der Ausbildung einer palettierfähigen Lage mehrfach erste Takte direkt durch den Manipulator von der Formation abgegriffen werden und dann nur einmal ein zweiter Takt innerhalb des Gruppiermoduls abgetrennt und durch den Manipulator erfasst in die entsprechende Zielposition und/oder Zielausrichtung verbracht wird, bevor weitere erste Takte durch den Manipulator gebildet werden.

Es soll somit klargestellt werden, dass es vom jeweiligen Lagenschema abhängt, in welcher Reihenfolge erste oder zweite Takte gebildet und positioniert werden. Weiterhin ist es auch vom Lagenschema abhängig, wie viele Stückgüter ein erster oder zweiter Takt jeweils umfasst. Insbesondere kann beispielsweise in einem ersten Verfahrensschritt ein erster Takt, umfassend ein Stückgut, vom Manipulator erfasst, räumlich abgetrennt und positioniert werden, in einem zweiten Verfahrensschritt ein erster Takt, umfassend drei Stückgüter, vom Manipulator erfasst, räumlich abgetrennt und positioniert werden, während gleichzeitig ein zweiter Takt, umfassend drei Stückgüter, von der Formation abgetrennt wird, den in einem nachfolgenden Verfahrensschritt durch den Manipulator erfasst und entsprechend positioniert wird o.ä.

Wesentlich ist jedoch, dass bei der Ausbildung des zweiten Taktes die Beabstandung der Stückgüter des zweiten Taktes von den nachfolgenden Stückgütern der Formation ohne Mitwirkung des Manipulators erfolgt, während die räumliches Abtrennung der Stückgüter des ersten Taktes von den nachfolgenden Stückgütern der Formation durch den Manipulator bewirkt wird.

Durch die dem Manipulator vorgeschaltete Beabstandung des zweiten Taktes von den nachfolgenden Stückgütern der Formation wird zusätzlicher Bewegungsfreiraum für den Manipulator bereitgestellt. Somit kann der Manipulator beispielsweise direkt beim Erfassen eines zweiten Taktes mit einer Drehung desselben beginnen. Durch den Abstand zwischen den Stückgütern des zweiten Taktes und den nachfolgenden Stückgütern der Formation kann insbesondere eine Kollision vermieden werden.

Die mindestens eine Transporteinrichtung weist in Transportrichtung eine Grund-Zuführgeschwindigkeit auf, die nachfolgend auch Transportgeschwindigkeit genannt wird. Weiterhin weist die Horizontalfördereinrichtung in Transportrichtung eine Grund-Fördergeschwindigkeit auf, die nachfolgend auch Fördergeschwindigkeit genannt wird. Vorzugsweise sind die Transportgeschwindigkeit der Transporteinrichtung und die Fördergeschwindigkeit der Horizontalfördereinrichtung weitgehend oder annähernd gleich, so dass von einem synchronen Lauf gesprochen werden kann. Insbesondere werden die in das Gruppiermodul einlaufende Stückgüter in der Regel vor dem Erfassen durch den Manipulator in Transportrichtung mit unveränderter Geschwindigkeit durch die Horizontalfördereinrichtung weitergeführt.

Die Geschwindigkeiten der zuführenden Transporteinrichtung und die Bewegungsabläufe des Manipulators werden über eine entsprechend ausgelegte und/oder mit entsprechenden Programmen ausgestattete Steuerungseinrichtung gesteuert. Die Steuerungseinrichtung besitzt Informationen zu den zu bildenden Takten und zu deren Zielpositionen und/oder Zielausrichtungen zur Ausbildung der jeweils gewünschten palettierfähigen Lage.

Gemäß einer bevorzugten Ausführungsform der Erfindung ist vorgesehen, dass die Ausbildung des zweiten Taktes, insbesondere die Bildung des Abstands zwischen den Stückgütern des zweiten Taktes und den nachfolgenden Stückgütern der Formation, durch eine zumindest kurzzeitige Verzögerung der wenigstens einen dem Gruppiermodul vorgeordneten Transporteinrichtung erfolgt. Dadurch wird zwischen den bereits innerhalb des Gruppiermoduls, insbesondere auf der Horizontalfördereinrichtung des Gruppiermoduls, angeordneten Stückgütern der Formation und den auf der Transporteinrichtung nachfolgenden Stückgütern der Formation ein Abstand erzeugt, da die auf der Horizontalfördereinrichtung befindlichen Stückgüter mit unveränderter Geschwindigkeit weiterbewegt werden.

Die Ausbildung des zweiten Taktes erfolgt insbesondere innerhalb des Gruppiermoduls ohne Mitwirkung des Manipulators. Dieser erfasst den zweiten Takt erst nach erfolgter Beabstandung von der Formation und verbringt diesen gemäß dem vorgegebenen Lagenschema in die entsprechend definierte relative Zielposition und/oder Zielausrichtung.

Gemäß einer Ausführungsform ist vorgesehen, dass der Manipulator beim Erfassen der Stückgüter entweder als erster Takt direkt von der Formation oder als zweiter, bereits von der Formation beabstandeter Takt beim Verbringen in die Zielposition und/oder Zielausrichtung zumindest kurzzeitig mit einer Geschwindigkeit in Transportrichtung bewegt wird, die größer oder gleich der Grund-Fördergeschwindigkeit der Horizontalfördereinrichtung ist. Dadurch werden die Stückgüter des ersten Taktes von den nachlaufenden Stückgütern der Formation beabstandet und die Stückgüter des zweiten Takes werden noch weiter von den nachlaufenden Stückgütern der Formation beabstandet.

Gemäß einer weiteren Ausführungsform der Erfindung kann weiterhin vorgesehen sein, dass eine Verzögerung der zuführenden Transporteinrichtung nach Zuführung einer vom zu erstellenden Lagenschema abhängigen Anzahl an Stückgütern erfolgt. Insbesondere wird in diesem Fall die Zuführung von weiteren Stückgütern nach Fertigstellung einer palettierfähigen Lage verzögert, damit die palettierfähige Lage durch geeignete Mittel aus dem Gruppiermodul entfernt und weiteren Verarbeitungsmodulen, beispielsweise einer Vorgruppierung und/oder einem Palettierer zugeführt werden kann.

Die Steuerungseinrichtung der Vorrichtung steuert die mindestens eine Transporteinrichtung und/oder der mindestens eine Manipulator zum klemmenden und/oder kraftschlüssigen und/oder formschlüssigen Erfassen eines ersten Taktes oder eines zweiten Taktes, umfassend jeweils mindestens ein Stückgut, ggf. zum räumlichen Abtrennen des ersten Taktes von der geschlossenen Formation sowie zum Bringen des ersten Taktes oder des zweiten Taktes in die jeweils definierte Zielposition und/oder Zielausrichtung. Insbesondere weist die Steuerungseinrichtung Informationen zu einer aus einer Vielzahl an Stückgütern zu bildenden Gruppierung für eine palettierfähige Lage auf und/oder hat diese abgespeichert. Dabei bilden die jeweiligen Zielpositionen und/oder Zielausrichtungen der Stückgüter einen Teil der Informationen und dem jeweiligen mindestens einen Stückgut sowie dem jeweiligen zuvorderst angeordneten Stückgut eine jeweilige bestimmte Lage und/oder relative Orientierung in der jeweiligen Gruppierung zuordnen.

Erfindungsgemäß ist vorgesehen, dass die Steuerungseinrichtung Informationen zu den jeweils abzugreifenden und zu positionierenden ersten Takten oder zweiten Takten enthält oder abgespeichert hat, sowie auch Informationen zum Bewegungsablauf und dazu korrespondierend dem jeweiligen Platzbedarf des Manipulators. Insbesondere wenn eine Drehung des jeweiligen Taktes notwendig ist, um eine definierte Zielausrichtung herzustellen, kann ein erhöhter Raumbedarf bestehen, da es ansonsten zu Kollisionen zwischen dem vom Manipulator erfassten mindestens einen Stückgut und den nachfolgenden Stückgütern der Formation kommen kann. In diesem Fall ist vor dem Erfassen durch den Manipulator die Beabstandung der Stückgüter als zweiter Takt sinnvoll. Beispielsweise kann vorgesehen sein, dass die Steuerungseinrichtung zur Ausbildung eines zweiten Taktes, umfassend mindestens ein Stückgut, innerhalb des Gruppiermoduls eine zumindest kurzzeitige Reduzierung der Transportgeschwindigkeit der Transporteinrichtung ansteuert, um dadurch das bereits innerhalb des Gruppiermoduls auf der Horizontalfördereinrichtung angeordnete mindestens eine Stückgut von den auf der Transporteinrichtung nachfolgenden Stückgütern der Formation abzutrennen und dadurch innerhalb des zweiten Gruppiermoduls den entsprechenden zweiten Takt zu erzeugen.

Weiterhin wird durch die Steuerungseinrichtung reguliert, ob die Taktbildung vor dem Erfassen der Stückgüter durch den Manipulator vermittels einer Verzögerung der Transportgeschwindigkeit der zuführenden Transporteinrichtung oder aber beim Erfassen der Stückgüter durch den Manipulator erfolgt.

Gegebenenfalls kann vorgesehen sein, dass dem Gruppiermodul eine geeignete Erfassungseinrichtung zugeordnet ist, die die Anzahl der in Formation einlaufenden Stückgüter auf der Horizontalfördereinrichtung erfasst. Die Erfassungseinrichtung ist vorzugsweise mit der Steuerungseinrichtung gekoppelt und übermittelt dieser die erfassten Daten. Beispielsweise sind bildgebende Sensoren hierfür geeignet, die die einzelnen Stückgüter erkennen können, wodurch es möglich ist, die Anzahl der in das Gruppiermodul eingelaufenen Stückgüter zu ermitteln. Sobald die gewünschte Anzahl an Stückgütern zur Ausbildung eines zweiten Taktes zumindest weitgehend auf die Horizontalfördereinrichtung übergetreten ist, wird die Verzögerung der zuführenden Transporteinrichtung angesteuert, um die den zweiten Takt bildenden Stückgüter von den nachlaufenden Stückgütern der Formation zu beabstanden.

Dabei ist es nicht zwingend notwendig, dass das hinterste Stückgut der zu bildenden zweiten Taktes bereits vollständig auf die Horizontalfördereinrichtung übergetreten sein muss. Stattdessen kann es sinnvoll sein, die Verzögerung der Transporteinrichtung bereits zu starten, wenn sich das hinterste Stückgut noch teilweise auf der Transporteinrichtung befindet. Damit sich die Verzögerung der Transporteinrichtung nicht auf das hinterste Stückgut überträgt, sollte dieses bereits zu mehr als 50%, vorzugsweise zu mehr als 70% auf die Horizontalfördereinrichtung übergetreten sein.

Gemäß einer Ausführungsform der Erfindung kann vorgesehen sein, dass der Manipulator die Stückgüter des jeweiligen Taktes symmetrisch oder asymmetrisch erfasst. Dabei ist vorgesehen, dass wenigstens eine, durch das mindestens zwei Klemm- und/oder Greifmitteln des wenigstens einen Manipulators erfasste Stückgut definierte erste vertikale und in etwa senkrecht zu einer Transportrichtung der Stückgüter und/oder einer Längserstreckungsrichtung der geschlossenen Formation orientierte Symmetrieebene beabstandet ist von einer hierzu in etwa parallel ausgerichteten zweiten vertikalen Symmetrieebene, die durch den Manipulator bzw. durch dessen Klemm- und/oder Greifmittel definiert ist.

Damit kann insbesondere definiert sein, dass das eine vom Manipulator erfasste Stückgut dort nicht mittig bzw. symmetrisch zur vertikalen Mittel- und/oder Drehachse des Manipulators bzw. dessen Klemm- und/oder Greifmittel erfasst und positioniert ist, während es verschoben und/oder in Richtung der Zielposition gebracht wird, ggf. unter gleichzeitiger Rotation. Dies gilt gleichermaßen für zwei oder mehr erfasste Stückgüter, die in Zusammenschau ebenfalls außermittig bzw. unsymmetrisch im Manipulator geklemmt sein können.

Dieses beschriebene Auftreten einer Distanz zwischen den beschriebenen vertikalen Symmetrieebenen kann auch als asynchrones Abgreifen bzw. als asynchrones Erfassen bzw. generell als asynchrone Verarbeitung der zu erfassenden und/oder zu positionierenden und/oder auszurichtenden Stückgüter bezeichnet werden, und zwar insbesondere deshalb, weil hierbei keine vollständige Beladung des Manipulators bzw. keine vollständige Beladung bzw. Beanspruchung des zwischen den Greiferbacken oder innerhalb des Greiferkopfes maximal zur Verfügung stehenden Raumes für aufzunehmende und/oder zu greifende Stückgüter erfolgt, sondern nur eine Teilbeladung, Teilerfassung und/oder teilweise Beanspruchung der Beladungs- und/oder Aufnahmekapazität des Manipulators bzw. seiner Klemm- und/oder Greifelemente.

Dennoch sei darauf hingewiesen, dass grundsätzlich eine solche Teilbeladung und/oder Teilbeanspruchung des im Manipulator zur Verfügung stehenden Raumes oder Platzes für zu erfassende Stückgüter nicht zwingend mit einer Distanzierung zwischen den Symmetrieebenen durch die insgesamt je Erfassungsvorgang aufgenommenen Stückgüter und durch den Manipulator bzw. dessen Klemm- und/oder Greifmittel einhergehen muss, dass die erfassten Stückgüter auch jeweils mittig im Manipulator bzw. mittig zwischen dessen Klemm- und/oder Greifmittel positioniert sein können, so dass an beiden Schmalseiten eines Stückgutes oder den nach außen weisenden Schmalseiten einer Gruppe von zwei oder drei Stückgütern ein verbleibender, ggf. ungenutzter Raum verbleiben kann, der nicht mit Stückgütern besetzt ist.

Von einem synchronen oder symmetrischen Abgreifen kann gesprochen werden, wenn diese erwähnten Symmetrieebenen zusammenfallen oder nahezu zusammenfallen. Dabei spricht man auch von einer vollständigen und/oder symmetrischen Beladung des Manipulators mit mehreren Stückgütern.

Gemäß einer weiteren Ausführungsform kann vorgesehen sein, dass Stückgüter in mindestens zwei parallelen Reihen dem Gruppiermodul und insbesondere dem Erfassungsbereich des mindestens einen Manipulators zugeführt werden. Dabei können die zwei Reihen über eine gemeinsame Transporteinrichtung oder über zwei separate, insbesondere jeweils einzeln ansteuerbare Transporteinrichtungen, zugeführt werden. Bei Verwendung mehrerer paralleler Transporteinrichtungen ist es bei einer mehrreihigen Stückgutzuführung somit möglich, die einzelnen Reihen jeweils individuell anzusteuern und insbesondere bei Bedarf zur Ausbildung von zweiten Takten zu verzögern.

Weiterhin kann in Abhängigkeit vom zu erstellenden Lagenschema vorgesehen sein, dass die Bewegung eines vom Manipulator gegriffenen Taktes in Transportrichtung gegenüber der Fördergeschwindigkeit der Horizontalfördereinrichtung zumindest zeitweise verzögert sein kann. Dies ist insbesondere denkbar, wenn sich beispielsweise eine Zwischen-Zielposition und/oder Zwischen-Zielausrichtung seitlich versetzt zur Flucht der in Formation einlaufenden Stückgüter befindet. Dadurch kann in Flucht zur Formation der Stückgüter innerhalb des Gruppiermoduls Platz geschaffen werden. Insbesondere kann beispielsweise vorgesehen sein, dass die derart positionierten Stückgüter in einem späteren Verfahrensschritt erneut vom Manipulator erfasst und in eine endgültige Zielposition und/oder Zielausrichtung gebracht werden.

Alternativ kann vorgesehen sein, dass innerhalb eines Erfassungszyklus des Manipulators, d.h. innerhalb der Gesamtzeit, in der ein Takt durch den Manipulator erfasst ist, zeitweise eine Verzögerung gegenüber der Fördergeschwindigkeit der Horizontalfördereinrichtung und/oder zeitweise eine Synchronbewegung mit einer der Fördergeschwindigkeit der Horizontalfördereinrichtung entsprechenden Geschwindigkeit und/zeitweise eine Beschleunigung gegenüber der Fördergeschwindigkeit der Horizontalfördereinrichtung in Transportrichtung vorgesehen ist.

Mit dem hier beschriebenen Verfahren werden insbesondere bei der lückenlosen Zuführung von Stückgütern zum Gruppiermodul Kollisionsprobleme nach dem Ergreifen der Stückgüter mittels des am Manipulator, gebildet vorzugsweise durch ein sog. Tripoden oder Parallelkinematik-Roboter, beweglich aufgehängten Greifer mit den nachfolgenden Stückgütern vermieden oder zumindest deutlich reduziert. Die Kollisionsproblematik besteht insbesondere dann, wenn die vom Manipulator erfassten Stückgüter zusätzlich oder gleichzeitig von diesem gedreht werden. Die Kollisionsproblematik kann durch die vor dem Erfassen durch den Manipulator innerhalb des Gruppiermoduls erzeugten Lücken reduziert werden.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, das erfindungsgemäße Verfahren bspw. im nachfolgenden zeitlichen Ablauf durchgeführt werden, indem in mindestens einer Reihe hintereinander bewegte Stückgüter, Artikel oder Gebinde durch eine entsprechend für die Durchführung des Verfahrens geeignete und hierfür ausgestattete Handhabungsvorrichtung laufen und dort manipuliert, d.h. erfasst, verschoben, gedreht und solchermaßen positioniert werden.

Eine zur Durchführung des erfindungsgemäßen Verfahrens geeignete und entsprechend ausgestattete Handhabungsvorrichtung umfasst insbesondere eine erste Transporteinrichtung, über welche unmittelbar aufeinanderfolgende Stückgüter in einer Reihe unterbrechungsfrei und/oder mit kontinuierlicher Transportgeschwindigkeit zu einem Gruppiermodul mit mindestens einem Manipulator transportiert werden, insbesondere in einen Erfassungsbereich des mindestens einen Manipulators der Handhabungsvorrichtung.

Der hier so genannte Erfassungsbereich meint im vorliegenden Zusammenhang insbesondere den maximalen und/oder den jeweils programmgesteuert vorgegebenen Bewegungsraum des Manipulators. Der Erfassungsbereich bzw. dessen äußere räumliche Begrenzung kann/können dabei größer sein als es die Außengrenzen der Horizontalfördereinrichtung des Gruppiermoduls vorgeben, auf deren ungefähr horizontalen Oberseite die Stückgüter befördert und/oder mittels des Manipulators positioniert und/oder verschoben werden. Normalerweise jedoch ist der Erfassungsbereich des Manipulators der sinnvolle Bewegungsbereich, in dem sich zu erfassende Stückgüter befinden können und/oder in dem die abzusetzenden Stückgüter positioniert werden können.

Die Transporteinrichtung ist beispielsweise mindestens ein Förderband oder mindestens eine andere geeignete Fördereinrichtung, auf der die Stückgüter vorzugsweise (jeweils) einreihig transportiert werden, wobei zwischen jeweils direkt aufeinander folgenden Stückgütern keine bzw. nur geringfügige, gegebenenfalls prozessbedingte Lücken bestehen. Insbesondere kann die Transporteinrichtung durch ein endlos umlaufendes Förderband, eine endlos umlaufende Förderkette o. dgl. gebildet sein, so dass damit die Stückgüter zur Horizontalfördereinrichtung angeliefert und heranbefördert werden können. Die in Reihe auf der Transporteinrichtung befindlichen Stückgüter laufen vorzugsweise mit einer Transportgeschwindigkeit in einer sogenannten geschlossenen Formation in den Erfassungsbereich des Manipulators ein.

Stückgüter im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei normalerweise mehrere Artikel wie insbesondere Behälter, Flüssigkeits- und/oder Getränkebehälter vermittels einer Umverpackung in Form einer Umreifung, einer Schrumpffolie o.ä. zu Gebinden zusammengefasst sind.

Dem Erfassungsbereich des Manipulators kann normalerweise eine Horizontalfördereinrichtung zugeordnet sein, deren die Stückgüter tragende Oberfläche sich mit einer Geschwindigkeit bewegt. Insbesondere kann die Geschwindigkeit der Horizontalfördereinrichtung der Transportgeschwindigkeit der zuführenden Transporteinrichtung entsprechen. Wahlweise können die Transportgeschwindigkeit der zuführenden Transporteinrichtung und die Geschwindigkeit der Horizontalfördereinrichtung auch geringfügig differieren, sofern gewährleistet werden kann, dass die ununterbrochene Förderung der Stückgüter zur Horizontalfördereinrichtung aufrechterhalten wird.

Die in Reihe und/oder Formation über die Transporteinrichtung ankommenden Stückgüter können zumindest bei differierenden Transportgeschwindigkeiten durch den aufgrund der höheren Transportgeschwindigkeit der Zuführung oder des zuführenden Bandes ggf. entstehenden Staudruck der nachfolgenden Stückgüter auf die Horizontalfördereinrichtung übergeschoben und dort unterbrechungsfrei weiter befördert werden. Allerdings ist es hierbei notwendig, diesen Staudruck durch geeignete Maßnahmen zu kontrollieren oder abzubauen, bspw. mittels eines gummierten Förderbandes der Horizontalfördereinrichtung und/oder mittels eines gummierten Förderbandes der zuführenden Transporteinrichtung, wahlweise auch durch ein zwischen der Transporteinrichtung und der Horizontalfördereinrichtung befindliches sog. Bremsband, das durch eine die Stückgüter tragende Oberfläche mit besonders hohem Reibungskoeffizienten charakterisiert ist.

Diese oder andere geeignete Maßnahmen sorgen für eine präzise Positionierung der jeweiligen Stückgüter am jeweiligen Erfassungsort im Erfassungsbereich des Gruppiermoduls, so dass eine präzise Übernahme durch den Manipulator zu gewährleisten ist. Es soll jedoch betont werden, dass solche Maßnahmen zum Abbau eines ggf. vorhandenen bzw. entstandenen Staudrucks nicht in allen Fällen notwendig und oftmals sogar gar nicht wünschenswert sind, auch wenn sie je nach gewählter Konfiguration der beweglichen Teile in einigen Fällen unverzichtbar bzw. sinnvoll anzuwenden sind.

Der Manipulator ist zum klemmenden und/oder formschlüssigen und/oder kraftschlüssigen Entgegennehmen von Stückgütern innerhalb des Erfassungsbereichs ausgebildet und ausgestattet. Insbesondere erfasst und greift der Manipulator einen für die Lagenbildung vorgegebenen Takt ab, wobei ein Takt im vorliegenden Ausführungsbeispiel und auch im Zusammenhang mit der vorliegenden Erfindung eine definierte Anzahl von Stückgütern umfasst. So kann der Manipulator bspw. einen ersten Takt, umfassend drei hintereinander angeordnete und in geschlossener Formation einlaufende Stückgüter, abgreifen, wonach dieser erste Takt von der einreihigen Formation der Stückgüter abgetrennt werden kann. Anschließend überführt der Manipulator den ersten Takt jeweils in eine Zielposition und/oder Zielausrichtung, insbesondere in eine erste Zielposition auf der Horizontalfördereinrichtung.

Dabei kann der erste Takt bspw. seitlich gegenüber den Stückgütern der einlaufenden Formation verschoben und zudem in Transportrichtung weiter von der Formation der Stückgüter beabstandet werden. Ein solcher seitlicher Versatz wird insbesondere erreicht, indem durch den Manipulator eine zusätzliche Bewegungskomponente senkrecht zur Transportrichtung auf die Stückgüter des abgegriffenen ersten Taktes aufgebracht wird. Die Beabstandung in Transportrichtung erfolgt, indem der Manipulator in Transportrichtung eine zusätzliche Geschwindigkeitskomponente auf die erfassten Stückgüter des ersten Taktes aufbringt oder ihnen eine solche zusätzliche Geschwindigkeitskomponente aufprägt.

Wenn im vorliegenden Fall bzw. generell im Zusammenhang der vorliegenden Erfindung generalisierend von einem Manipulator die Rede ist, kann es sich konkret bei dem zur Überführung des mindestens einen durch den Manipulator abgegriffenen Stückgutes in die Zielposition und/oder Zielausrichtung vorgesehenen Teil des Manipulators beispielsweise um einen beweglichen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes (auch: des Manipulators), der die Stückgüter in der gewünschten Weise erfassen, verschieben, positionieren, platzieren, drehen etc. kann, um die jeweiligen Zielpositionen und/oder Zielausrichtungen für die Stückgüter anfahren zu können.

Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Der Manipulator kann in diesem Ausführungsbeispiel und/oder im Zusammenhang mit der gesamten vorliegenden Erfindung bspw. durch einen Greiferkopf mit seitlich zustellbaren und öffenbaren Klemmbacken o.ä. gebildet sein oder einen solchen Greiferkopf mit seitlichen Klemmbacken umfassen, welche typischerweise beim Erfassen der Stückgüter gegeneinander zustellbar sind, um die Stückgüter form- und/oder kraftschlüssig zu erfassen bzw. zu klemmen, wogegen die Klemmbacken beim Erreichen der Zielposition jeweils wieder geöffnet werden können.

Wenn im vorliegenden Zusammenhang bzw. bei der vorliegenden Beschreibung daher von einem Manipulator und/oder von einem Greifer oder Greiferkopf die Rede ist, so können diese Begriffe als Synonyme verwendet sein; ggf. ist der Greifer oder Greiferkopf auch als Unterbaugruppe oder Bestandteil des umfassender zu verstehenden Manipulators anzusehen.

Die Anordnung der durch den Manipulator 5 in mehreren aufeinanderfolgenden Verfahrensschritten erfassten Stückgüter in definierten Zielpositionen und/oder Zielausrichtungen auf der Horizontalfördereinrichtung erfolgt insbesondere aufgrund eines definierten Lagenschemas oder im Hinblick auf ein definiertes Lagenschema zur Ausbildung einer palettierfähigen Lage. Unter Lagenschema versteht man insbesondere die relative Anordnung einer Vielzahl von Stückgütern innerhalb einer zu palettierenden Lage. Dabei können zwischen den Stückgütern in ihrer jeweiligen Zielposition und/oder Zielausrichtung auf der Horizontalfördereinrichtung noch Lücken vorhanden sein, die in der fertigen Endlage gemäß Lagenschema nicht mehr vorhanden sind. Beispielsweise kann anschließend an die Horizontalfördereinrichtung ein Modul, beispielsweise eine sogenannte Vorgruppierung, vorgesehen sein, in der die vom Manipulator in relativer Position zueinander angeordneten Stückgüter seitlich zusammengeschoben werden und dabei die fertige Endlage erstellt wird, die anschließend auf eine Palette überführt werden kann.

Weiterhin ist unter den Verfahrensschritten, die zur Ausbildung einer palettierfähigen Lage notwendig sind, wenigstens ein Verfahrensschritt vorgesehen, bei dem zuerst innerhalb des Gruppiermoduls ein von den nachfolgenden Stückgütern der Formation beabstandeter zweiter Takt, umfassend mindestens ein Stückgut, gebildet wird. Dies wird vorzugsweise dadurch erreicht, dass die Transporteinrichtung zumindest kurzfristig auf eine reduzierte Transportgeschwindigkeit abgebremst wird. Dadurch wird ein zweiter Takt, umfassend bspw. zwei oder drei Stückgüter, die sich bereits auf der Horizontalfördereinrichtung befinden, räumlich von den nachfolgenden Stückgütern der Formation abgetrennt. Insbesondere wird eine Lücke zwischen den Stückgütern des zweiten Taktes und den nachfolgenden Stückgütern der Formation gebildet.

Nachfolgend kann der beabstandete zweite Takt nunmehr durch den Manipulator erfasst und unter Drehung um etwa 90° und Beschleunigung in Transportrichtung in eine zweite Zielposition und Zielausrichtung verbracht werden.

Indem durch die Verzögerung der Transporteinrichtung innerhalb des Gruppiermoduls bereits der nachfolgend zu positionierende zweite Takt vor dem Erfassen durch den Manipulator von der Formation abgetrennt und zumindest geringfügig beabstandet wurde, wird innerhalb der Gruppiermoduls zumindest geringfügig mehr Freiraum für die Bewegung des Manipulators erzeugt, so dass dieser die Stückgüter des zweiten Taktes einfacher erfassen und beispielsweise direkt mit einer ggf. notwendigen Drehung beginnen kann, ohne mit den nachfolgenden Stückgütern der Formation zu kollidieren. Die Verzögerung der Transporteinrichtung dient somit insbesondere dem Zweck, innerhalb des Gruppiermoduls Freiraum für nachfolgende Manipulationsschritte zu erzeugen

Insbesondere erfolgt in den zuvor beschriebenen Verfahrensschritten das Abtrennen und Beabstanden der Stückgüter des zweiten Taktes von den nachfolgenden Stückgütern der Formation nicht durch den Manipulator; stattdessen wird der zweite Takt durch eine Verzögerung der zuführenden Transporteinrichtung innerhalb des Gruppiermoduls erzeugt.

Das Verfahren sieht insbesondere eine Kombination von erster Taktbildung unter Mitwirkung des Manipulators und zweiter Taktbildung ohne Mitwirkung des Manipulators vor, die insbesondere vom jeweilig auszubildenden Lagenschema abhängig ist.

Wahlweise bzw. optional ist es auch möglich, dass die Stückgüter mehrreihig auf einer zuführenden Transporteinrichtung oder auf mehreren, insbesondere parallel angeordneten Transporteinrichtungen in mehreren Parallelreihen zum Erfassungsbereich des Manipulators hin transportiert werden. Die Parallelreihen können dabei beabstandet zueinander oder weitgehend ohne Abstand zueinander transportiert werden.

Auch wenn in den dargestellten Verfahrensschritten jeweils Takte, umfassend ein Stückgut, zwei, drei oder mehr Stückgüter, vom Manipulator symmetrisch erfasst werden, so können in Abhängigkeit vom herzustellenden Lagenschema weitere Verfahrensschritte vorsehen, dass durch den Manipulator beispielsweise nur ein Stückgut oder zwei oder eine andere abweichende Anzahl an Stückgütern als erster Takt erfasst werden und/oder dass nur ein Stückgut oder zwei Stückgüter oder eine andere abweichende Anzahl an Stückgütern als zweiter Takt abgetrennt und durch den Manipulator erfasst werden. In diesem Zusammenhang kann auf die Anmeldung mit dem Aktenzeichen DE 10 2016 225 499.5 verwiesen werden.

In dieser vorgenannten Veröffentlichung sind insbesondere das vollständige symmetrische Beladen des Manipulators und das unvollständige Beladen des Manipulators beschrieben, wobei dieses unvollständige Beladen insbesondere als asymmetrisches Beladen bezeichnet wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

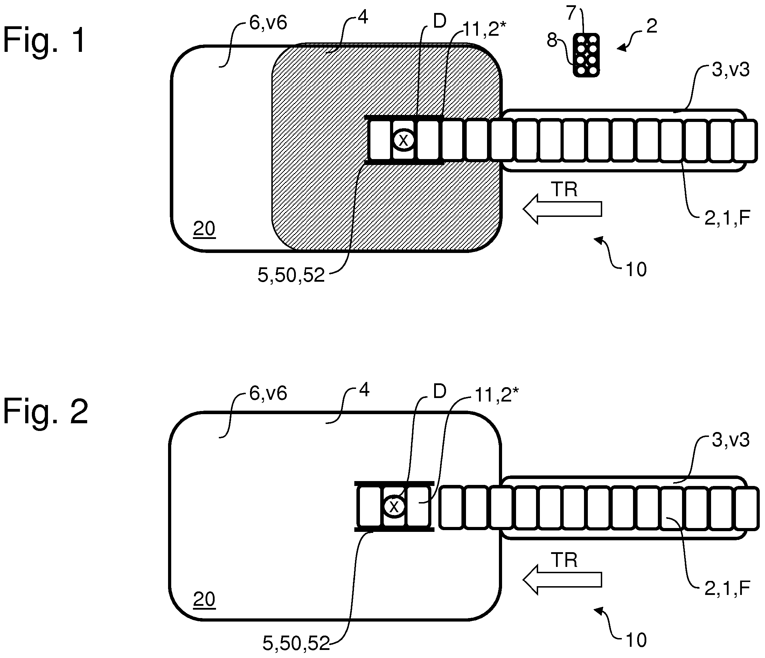

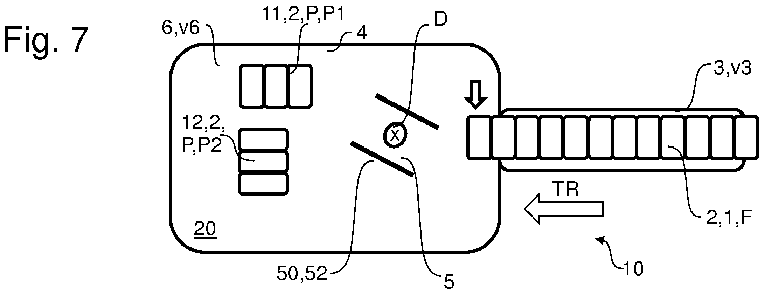

Figuren 1 bis 7 zeigen schematisch einen sinnvollen zeitlichen Ablauf eines Ausführungsbeispiels eines erfindungsgemäßen Verfahrens zum Umgang mit in mindestens einer Reihe hintereinander bewegten Stückgütern durch eine entsprechende Handhabungsvorrichtung.

Für gleiche oder gleich wirkende Elemente der Erfindung werden in den Figuren 1 bis 7 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Die nachfolgend im Detail erläuterten Figuren 1 bis 7 zeigen in schematischer Weise einen sinnvollen zeitlichen Ablauf eines Ausführungsbeispiels eines Verfahrens zum Umgang mit in mindestens einer Reihe 1 hintereinander bewegten Stückgütern 2 durch eine entsprechende Handhabungsvorrichtung 10.

Eine in den Figuren 1 bis 7 schematisch angedeutete und jeweils in Draufsicht von oben gezeigte Handhabungsvorrichtung 10 umfasst eine erste Transporteinrichtung 3, über welche unmittelbar aufeinanderfolgende Stückgüter 2 in einer Reihe 1 unterbrechungsfrei und/oder mit kontinuierlicher Transportgeschwindigkeit v3 zu einem Gruppiermodul 20 mit mindestens einem Manipulator 5 transportiert werden, insbesondere in einen Erfassungsbereich 4 (in den Fig. 1 durch Schraffur gekennzeichnet) des mindestens einen Manipulators 5 der Handhabungsvorrichtung 10.

Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann/können dabei größer sein als es die Außengrenzen der Horizontalfördereinrichtung 6 vorgeben, auf deren ungefähr horizontalen Oberseite die Stückgüter 2 befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2 befinden können und/oder in dem die abzusetzenden Stückgüter 2 positioniert werden können.

Die Transporteinrichtung 3 ist beispielsweise mindestens ein Förderband oder mindestens eine andere geeignete Fördereinrichtung, auf der die Stückgüter 2 vorzugsweise (jeweils) einreihig transportiert werden, wobei zwischen jeweils direkt aufeinander folgenden Stückgütern 2 keine bzw. nur geringfügige, gegebenenfalls prozessbedingte Lücken bestehen. Insbesondere kann die Transporteinrichtung 3 durch ein endlos umlaufendes Förderband, eine endlos umlaufende Förderkette o. dgl. gebildet sein, so dass damit die Stückgüter 2 zur Horizontalfördereinrichtung 6 angeliefert und heranbefördert werden können. Die in Reihe 1 auf der Transporteinrichtung 3 befindlichen Stückgüter 2 laufen vorzugsweise mit einer Transportgeschwindigkeit v3 in einer sogenannten geschlossenen Formation F in den Erfassungsbereich 4 des Manipulators 5 ein.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. mehr sein, wobei - wie in Fig. 1 beispielhaft dargestellt - normalerweise mehrere Artikel wie insbesondere Behälter, Flüssigkeits- und/oder Getränkebehälter 7 vermittels einer Umverpackung in Form einer Umreifung, einer Schrumpffolie 8 o.ä. zu Gebinden zusammengefasst sind.

Dem Erfassungsbereich 4 des Manipulators 5 ist eine Horizontalfördereinrichtung 6 zugeordnet, deren die Stückgüter 2 tragende Oberfläche sich mit einer Geschwindigkeit v6 bewegt. Insbesondere kann die Geschwindigkeit v6 der Horizontalfördereinrichtung 6 der Transportgeschwindigkeit v3 der Transporteinrichtung 3 entsprechen. Wahlweise können die Transportgeschwindigkeit v3 und die Geschwindigkeit v6 auch geringfügig differieren, sofern gewährleistet werden kann, dass die ununterbrochene Förderung der Stückgüter 2 zur Horizontalfördereinrichtung 6 aufrechterhalten wird.

Die in Reihe 1 bzw. Formation F über die Transporteinrichtung 3 ankommenden Stückgüter 2 können zumindest bei differierenden v3 und v6 durch den aufgrund der höheren Transportgeschwindigkeit v3 ggf. entstehenden Staudruck der nachfolgenden Stückgüter 2 auf die Horizontalfördereinrichtung 6 übergeschoben und dort unterbrechungsfrei weiter befördert werden. Allerdings ist es hierbei notwendig, diesen Staudruck durch geeignete Maßnahmen abzubauen, bspw. mittels eines gummierten Förderbandes der Horizontalfördereinrichtung 6 und/oder mittels eines gummierten Förderbandes der Transporteinrichtung 3, wahlweise auch durch ein zwischen der Transporteinrichtung 3 und der Horizontalfördereinrichtung 6 befindliches sog. Bremsband, das durch eine die Stückgüter 2 tragende Oberfläche mit besonders hohem Reibungskoeffizienten charakterisiert ist. Diese oder andere geeignete Maßnahmen sorgen für eine präzise Positionierung der jeweiligen Stückgüter 2 am jeweiligen Erfassungsort im Erfassungsbereich 4, so dass eine präzise Übernahme durch den Manipulator 5 zu gewährleisten ist. Es soll jedoch betont werden, dass solche Maßnahmen zum Abbau eines ggf. vorhandenen bzw. entstandenen Staudrucks nicht wünschenswert sind, auch wenn sie je nach gewählter Konfiguration der beweglichen Teile unverzichtbar bzw. sinnvoll anzuwenden sind.

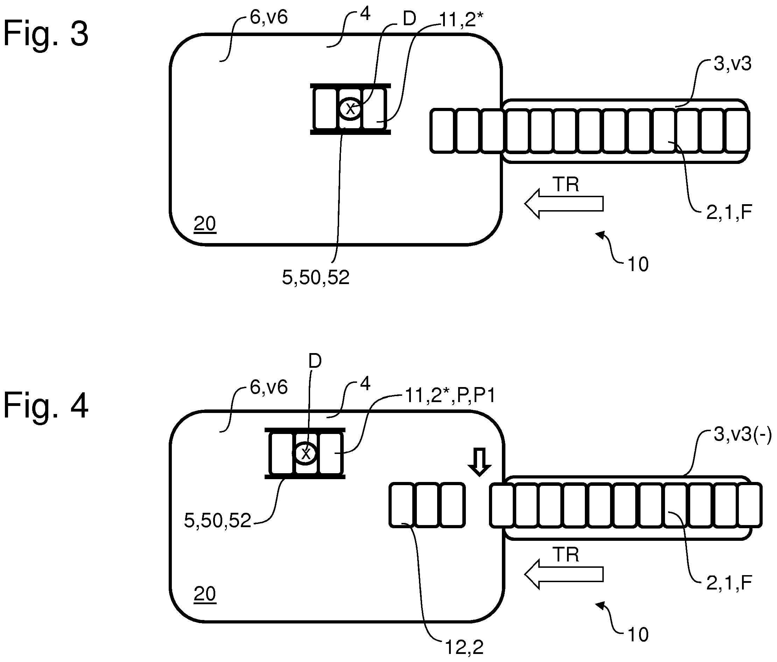

Der Manipulator 5 ist zum klemmenden und/oder formschlüssigen und/oder kraftschlüssigen Entgegennehmen von Stückgütern 2 innerhalb des Erfassungsbereichs 4 ausgebildet und ausgestattet. Die vom Manipulator 5 erfassten Stückgüter 2 - d.h. in der Regel mindestens eines der in der Formation F zuvorderst einlaufenden Stückgüter 2 - werden nachfolgend zur Unterscheidung von den übrigen in der Formation F oder in ihrer jeweiligen Zielposition P und/oder Zielausrichtung angeordneten Stückgütern 2 mit dem Bezugszeichen 2* bezeichnet. Insbesondere greift der Manipulator 5 einen für die Lagenbildung vorgegebenen Takt 11, 12 ab, wobei ein Takt eine definierte Anzahl von Stückgütern 2* umfasst. Beispielsweise greift der Manipulator 5 gemäß Figuren 1 und 2 einen ersten Takt 11 umfassend drei hintereinander angeordnete, in geschlossener Formation F einlaufende Stückgüter 2*, trennt diesen ersten Takt 11 von der einreihigen Formation F der Stückgüter 2 ab (vgl. Fig. 2) und überführt den ersten Takt 11 jeweils in eine Zielposition P und/oder Zielausrichtung, insbesondere in eine erste Zielposition P1 auf der Horizontalfördereinrichtung 6 (vgl. Figuren 3 und 4). Dabei wird der erste Takt 11 seitlich gegenüber den Stückgütern 2 der einlaufenden Formation F verschoben und zudem in Transportrichtung TR weiter von der Formation F der Stückgüter 2 beabstandet. Der seitliche Versatz wird erreicht, indem durch den Manipulator 5 eine zusätzliche Bewegungskomponente senkrecht zur Transportrichtung TR auf die Stückgüter 2* des abgegriffenen ersten Taktes 11 aufgebracht wird. Die Beabstandung in Transportrichtung TR erfolgt, indem der Manipulator 5 in Transportrichtung TR eine zusätzliche Geschwindigkeitskomponente auf die erfassten Stückgüter 2* des ersten Taktes 11 aufbringt.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen durch den Manipulator 5 abgegriffenen Stückgutes 2* in die Zielposition P und/oder Zielausrichtung vorgesehenen Teil des Manipulators 5 beispielsweise um einen Werkzeugkopf, einen Greiferkopf 50 o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Greiferkopfes 50 (auch: des Manipulators 5), der die Stückgüter 2* in der gewünschten Weise erfassen, verschieben, positionieren, platzieren, drehen etc. kann, um die jeweiligen Zielpositionen P und/oder Zielausrichtungen für die Stückgüter 2* anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Der Manipulator 5 kann in diesem Ausführungsbeispiel und/oder im Zusammenhang mit der gesamten vorliegenden Erfindung bspw. durch einen Greiferkopf 50 mit seitlich zustellbaren und öffenbaren Klemmbacken 52 o.ä. gebildet sein oder einen solchen Greiferkopf 50 mit seitlichen Klemmbacken 52 umfassen, welche typischerweise beim Erfassen der Stückgüter 2* gegeneinander zustellbar sind, um die Stückgüter 2* form- und/oder kraftschlüssig zu erfassen bzw. zu klemmen, wogegen die Klemmbacken 52 beim Erreichen der Zielposition P jeweils wieder geöffnet werden können. Wenn im vorliegenden Zusammenhang bzw. bei der vorliegenden Beschreibung daher von einem Manipulator 5 und/oder von einem Greifer oder Greiferkopf 50 die Rede ist, so können diese Begriffe als Synonyme verwendet sein; ggf. ist der Greifer oder Greiferkopf 50 auch als Unterbaugruppe oder Bestandteil des umfassender zu verstehenden Manipulators 5 anzusehen.

Die Anordnung der durch den Manipulator 5 in mehreren aufeinanderfolgenden Verfahrensschritten erfassten Stückgüter 2* in definierten Zielpositionen P und/oder Zielausrichtungen auf der Horizontalfördereinrichtung 6 erfolgt insbesondere aufgrund eines definierten Lagenschemas zur Ausbildung einer palettierfähigen Lage. Unter Lagenschema versteht man insbesondere die relative Anordnung einer Vielzahl von Stückgütern 2 innerhalb einer zu palettierenden Lage. Dabei können zwischen den Stückgütern 2 in ihrer jeweiligen Zielposition P und/oder Zielausrichtung auf der Horizontalfördereinrichtung 6 noch Lücken vorhanden sein, die in der fertigen Endlage gemäß Lagenschema nicht mehr vorhanden sind. Beispielsweise kann anschließend an die Horizontalfördereinrichtung 6 ein Modul, beispielsweise eine sogenannte Vorgruppierung, vorgesehen sein, indem die vom Manipulator 5 in relativer Position zueinander angeordneten Stückgüter 2 seitlich zusammengeschoben werden und dabei die fertige Endlage erstellt wird, die anschließend auf eine Palette überführt werden kann.

Weiterhin ist unter den Verfahrensschritten, die zur Ausbildung einer palettierfähigen Lage notwendig sind, wenigstens ein Verfahrensschritt vorgesehen, bei dem zuerst innerhalb des Gruppiermoduls 20 ein von den nachfolgenden Stückgütern 2 der Formation F beabstandeter zweiter Takt 12 umfassend mindestens ein Stückgut 2 gebildet wird. Dies wird vorzugsweise dadurch erreicht, dass - wie in Fig. 4 dargestellt - die Transporteinrichtung 3 zumindest kurzfristig auf eine reduzierte Transportgeschwindigkeit v3(-) abgebremst wird. Dadurch wird ein zweiter Takt 12 umfassend drei Stückgüter 2, die sich bereits auf der Horizontalfördereinrichtung befinden, räumlich von den nachfolgenden Stückgütern 2 der Formation F abgetrennt. Insbesondere wird eine durch einen Pfeil gekennzeichnete Lücke zwischen den Stückgütern 2 des zweiten Taktes 12 und den nachfolgenden Stückgütern 2 der Formation F gebildet.

Nachfolgend wird - wie in Fig. 5 dargestellt - der beabstandete zweite Takt 12 nunmehr durch den Manipulator 5 erfasst und unter Drehung um 90° und Beschleunigung in Transportrichtung TR in eine zweite Zielposition und Zielausrichtung P2 verbracht (siehe Figuren 6 und 7).

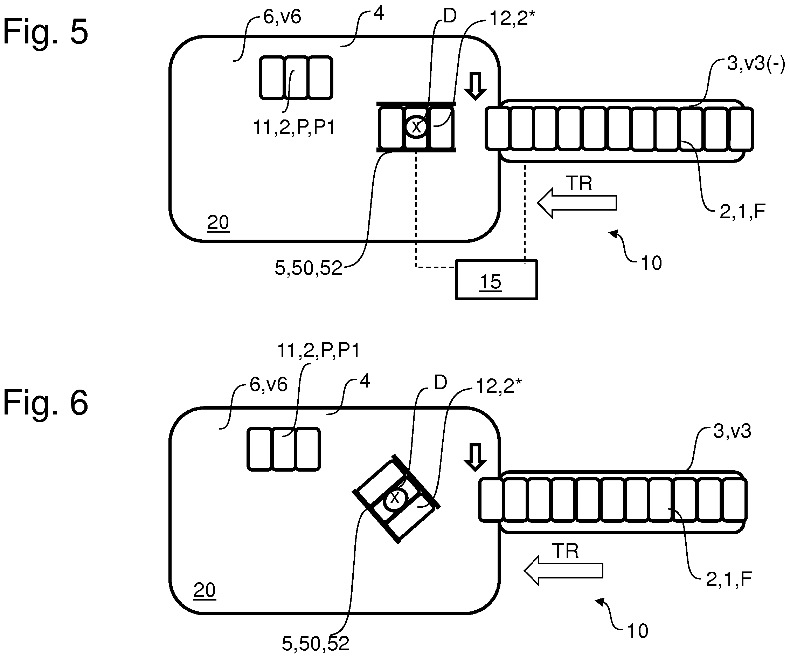

Indem durch die Verzögerung der Transporteinrichtung 3 innerhalb des Gruppiermoduls 20 bereits der nachfolgend zu positionierende zweite Takt 12 vor dem Erfassen durch den Manipulator 5 von der Formation F abgetrennt und zumindest geringfügig beabstandet wurde, wird innerhalb der Gruppiermoduls 20 zumindest geringfügig mehr Freiraum für die Bewegung des Manipulators 5 erzeugt, so dass dieser die Stückgüter 2 des zweiten Taktes 12 einfacher erfassen und beispielsweise direkt mit der Drehung gemäß Fig. 6 beginnen kann, ohne mit den nachfolgenden Stückgütern 2 der Formation F zu kollidieren. Die Verzögerung der Transporteinrichtung 3 dient somit insbesondere dem Zweck, innerhalb des Gruppiermoduls 20 Freiraum für nachfolgende Manipulationsschritte zu erzeugen

Insbesondere erfolgt in den vorbeschriebenen Verfahrensschritten das Abtrennen und Beabstanden der Stückgüter 2 des zweiten Taktes 12 von den nachfolgenden Stückgütern 2 der Formation F nicht wie vorbekannt durch den Manipulator 5, stattdessen wird der zweite Takt 12 durch eine Verzögerung der zuführenden Transporteinrichtung 3 innerhalb des Gruppiermoduls 20 erzeugt.

Das Verfahren sieht insbesondere eine Kombination von erster Taktbildung unter Mitwirkung des Manipulators 5 und zweiter Taktbildung ohne Mitwirkung des Manipulators 5 vor, die insbesondere vom jeweilig auszubildenden Lagenschema abhängig ist.

Die Geschwindigkeiten v3 der Transporteinrichtung 3 und die Bewegung des Manipulators 5 werden beispielsweise über eine Steuerungseinrichtung 15 gesteuert, die in Fig. 5 beispielhaft dargestellt ist. Die Steuerungseinrichtung 15 besitzt vorzugsweise Informationen zu den zu bildenden Takten 11, 12 und zu deren Zielpositionen P und/oder Zielausrichtungen zur Ausbildung der jeweils gewünschten palettierfähigen Lage. Insbesondere wird durch die Steuerungseinrichtung 15 reguliert, ob die Taktbildung vor dem Erfassen der Stückgüter 2 durch den Manipulator 5 vermittels einer Verzögerung der Transportgeschwindigkeit der zuführenden Transporteinrichtung 3 oder aber beim Erfassen der Stückgüter 2 durch den Manipulator 5 erfolgt.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Insbesondere ist es optional möglich, dass die Stückgüter 2 mehrreihig auf einer Transporteinrichtung 3 oder auf mehreren, insbesondere parallel angeordneten Transporteinrichtungen 3 in mehreren Parallelreihen zum Erfassungsbereich 4 des Manipulators 5 hin transportiert werden. Die Parallelreihen können dabei beabstandet zueinander oder weitgehend ohne Abstand zueinander transportiert werden.

Auch wenn in den dargestellten Verfahrensschritten jeweils Takte 11, 12 umfassend drei Stückgüter 2* vom Manipulator 5 symmetrisch erfasst werden, so können in Abhängigkeit vom herzustellenden Lagenschema weitere Verfahrensschritte vorsehen, dass durch den Manipulator 5 beispielsweise nur ein oder zwei oder eine andere abweichende Anzahl an Stückgütern 2 als erster Takt 11 erfasst werden und/oder dass nur ein oder zwei oder eine andere abweichende Anzahl an Stückgütern 2 als zweiter Takt 12 abgetrennt und durch den Manipulator 5 erfasst werden. In diesem Zusammenhang wird auf die Anmeldung mit dem Aktenzeichen DE 10 2016 225 499.5 verwiesen. In dieser vorgenannten Anmeldung sind insbesondere das vollständige symmetrische Beladen des Manipulators 5 und das unvollständige asymmetrische Beladen des Manipulators 5 beschrieben.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Stückgüter und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Reihe
- 2: Stückgut
- 2*: erfasstes Stückgut
- 3: erste Transporteinrichtung
- 4: Erfassungsbereich
- 5: Manipulator
- 6: Horizontalfördereinrichtung
- 7: Flüssigkeits- und/oder Getränkebehälter
- 8: Schrumpffolie
- 10: Handhabungsvorrichtung
- 11: erster Takt
- 12: zweiter Takt
- 15: Steuerungseinrichtung
- 20: Gruppiermodul

- F: geschlossene Formation
- P: Zielposition
- P1: erste Zielposition
- P2: zweite Zielposition und Zielanordnung
- TR: Transportrichtung
- v3: Transportgeschwindigkeit der Transporteinrichtung
- v3(-): reduzierte Transportgeschwindigkeit
- v6: Fördergeschwindigkeit der Horizontalfördereinrichtung

## Patentansprüche

1. Verfahren zur Handhabung von Stückgütern (2), Artikeln und/oder Gebinden zum Zwecke der Ausbildung von aus jeweils mehreren Stückgütern (2), Artikeln und/oder Gebinden bestehenden palettierfähigen Lagen,
- wobei das Verfahren eine ein- oder mehrreihige Förderung der Stückgüter (2), Artikel und/oder Gebinde mittels wenigstens einer Transporteinrichtung (3) in einer Transportrichtung (TR) in jeweils geschlossener und/oder lückenloser Formation (F) zu einem Gruppiermodul (20) mit wenigstens einer Horizontalfördereinrichtung (6) sowie mindestens einem Manipulator (5) vorsieht,
- wobei die Transporteinrichtung (3) in Transportrichtung eine Grund-Zuführgeschwindigkeit (v3) und die Horizontalfördereinrichtung (6) in Transportrichtung (TR) eine Grund-Fördergeschwindigkeit (v6) aufweisen, wobei die Grund-Zuführgeschwindigkeit (v3) und die Grund- Fördergeschwindigkeit (v6) gleich oder synchron sind,
- wobei die Geschwindigkeiten (v3) der zuführenden Transporteinrichtung (3) und die Bewegungsabläufe des Manipulators (5) über eine entsprechend ausgelegte und/oder mit entsprechenden Programmen ausgestattete Steuerungseinrichtung (15) gesteuert werden,
- wobei der Manipulator (5) jeweils Takte, umfassend mindestens ein Stückgut (2), erfasst und innerhalb des Gruppiermoduls (20) durch Drehen und/oder Verschieben und/oder Heben in eine Zielposition (P) und/oder Zielausrichtung entsprechend einer definierte Lagenanordnung der auszubildenden palettierfähigen Lage bringt,
**dadurch gekennzeichnet, dass**
- das Verfahren wenigstens einen Verfahrensschritt zur Ausbildung der jeweiligen palettierfähigen Lage vorsieht, bei dem der Manipulator (5) einen ersten Takt (11) umfassend mindestens ein Stückgut (2) der geschlossenen und/oder lückenlosen Formation (F) klemmend und/oder kraft- und/oder formschlüssig erfasst, von der geschlossenen und/oder lückenlosen Formation (F) räumlich abtrennt und in eine erste definierte relative Zielposition (P1) und/oder Zielausrichtung gegenüber nachfolgenden Stückgütern (2) der geschlossenen und/oder lückenlosen Formation (F) verbringt und
- wobei das Verfahren wenigstens einen weiteren Verfahrensschritt zur Ausbildung der jeweiligen palettierfähigen Lage vorsieht, bei dem innerhalb des Gruppiermoduls (20) ein von den nachfolgenden Stückgütern (2) der geschlossenen und/oder lückenlosen Formation (F) beabstandeter zweiter Takt (12) umfassend mindestens ein Stückgut (2) ohne Mitwirkung des Manipulators (5) ausgebildet wird,
- und wobei nachfolgend der von der geschlossenen und/oder lückenlosen Formation (F) beabstandete zweite Takt (12) und/oder das wenigstens eine Stückgut (2) des zweiten Taktes (12) durch den Manipulator (5) erfasst und in eine zweite definierte relative Zielposition und/oder Zielausrichtung (P2) innerhalb des Gruppiermoduls (20) verbracht wird,
- wobei die Steuerungseinrichtung (15) Informationen zu den zu bildenden Takten und zu deren Zielpositionen und/oder Zielausrichtungen zur Ausbildung der jeweils gewünschten palettierfähigen Lage besitzt, und
- wobei die Steuerungseinrichtung (15) reguliert, ob die Taktbildung vor dem Erfassen der Stückgüter (2) durch den Manipulator (5) vermittels einer Verzögerung der Grund-Zuführgeschwindigkeit (v3) der zuführenden Transporteinrichtung (3) oder aber beim Erfassen der Stückgüter (2) durch den Manipulator (5) erfolgt.

2. Verfahren nach Anspruch 1, bei dem der Manipulator (5) direkt nach dem Erfassen mindestens eines Stückgutes (2), Artikels und/oder Gebindes der Formation (F) oder nach Erfassen des innerhalb des Gruppiermoduls (20) gebildeten zweiten Taktes (12) zumindest kurzzeitig mit einer Geschwindigkeit (v5) in Transportrichtung (TR) bewegt wird, die größer oder gleich der Grund- Fördergeschwindigkeit (v6) der Horizontalfördereinrichtung (6) ist.

3. Verfahren nach Anspruch 2, bei dem eine Verzögerung der zuführenden Transporteinrichtung (3) und/oder eine Reduzierung der Fördergeschwindigkeit (v3) der zuführenden Transporteinrichtung (3) nach Zuführung einer vom zu erstellenden Lagenschema abhängigen Anzahl an Stückgütern (2) erfolgt/erfolgen.

4. Verfahren nach einem der voranstehenden Ansprüche, bei dem der Manipulator (5) und/oder die mindestens eine Transporteinrichtung durch eine Steuerungseinrichtung (15) angesteuert und/oder reguliert werden.

5. Verfahren nach Anspruch 4, bei dem die Steuerungseinrichtung (15) zur Ausbildung eines zweiten Taktes (12), der zweite Takt (12) umfassend mindestens ein Stückgut (2), innerhalb des Gruppiermoduls (20) eine zumindest kurzzeitige Reduzierung der Transportgeschwindigkeit (v3) der Transporteinrichtung (3) ansteuert.

6. Verfahren nach Anspruch 4 oder 5, bei dem die Steuerungseinrichtung (15) Informationen zu einer aus einer Vielzahl an Stückgütern (2) zu bildenden Gruppierung für eine palettierfähige Lage aufweist bzw. abgespeichert hat, wobei die jeweiligen Zielpositionen (P) und/oder Zielausrichtungen der Stückgüter (2) einen Teil der Informationen bilden und dem jeweiligen mindestens einen Stückgut (2) eine bestimmte Lage und/oder relative Orientierung in der jeweiligen Gruppierung zuordnen.

7. Verfahren nach einem der voranstehenden Ansprüche, bei dem der Manipulator Stückgüter (2) symmetrisch oder asymmetrisch erfassen kann.

8. Verfahren nach einem der voranstehenden Ansprüche, bei dem die Stückgüter (2) einem Erfassungsbereich (4) des mindestens einen Manipulators (5) mindestens zweireihig, insbesondere über mindestens zwei Transporteinrichtungen (3), zugeführt werden.

9. Verfahren nach einem der voranstehenden Ansprüche, bei dem die Stückgüter (2) eines vom Manipulator (5) erfassten ersten Taktes (11) oder zweiten Taktes (12) zumindest zeitweise in einer Fördergeschwindigkeit in Transportrichtung (TR) gegenüber der Grund- Fördergeschwindigkeit (v6) der Horizontalfördereinrichtung (6) in Transportrichtung verzögert werden.

10. Vorrichtung (10) zur Handhabung von Stückgütern (2), Artikeln und/oder Gebinden zum Zwecke der Ausbildung von aus jeweils mehreren Stückgütern (2), Artikeln und/oder Gebinden bestehenden palettierfähigen Lagen zur Durchführung eines Verfahrens nach einem der Ansprüche 1 bis 9, wobei die Vorrichtung (10) eine Steuerungseinrichtung umfasst,
wobei
- das mit der Vorrichtung (10) durchgeführte Verfahren eine ein- oder mehrreihige Förderung der Stückgüter (2), Artikel und/oder Gebinde mittels wenigstens einer Transporteinrichtung (3) in einer Transportrichtung (TR) in jeweils geschlossener und/oder lückenloser Formation (F) zu einem Gruppiermodul (20) mit wenigstens einer Horizontalfördereinrichtung (6) sowie mindestens einem Manipulator (5) vorsieht,
- -wobei die Transporteinrichtung (3) in Transportrichtung eine Grund-Zuführgeschwindigkeit (v3) und die Horizontalfördereinrichtung (6) in Transportrichtung (TR) eine Grund-Fördergeschwindigkeit (v6) aufweisen, wobei die Grund-Zuführgeschwindigkeit (v3) und die Grund- Fördergeschwindigkeit (v6) gleich oder synchron sind,
- -wobei die Geschwindigkeiten (v3) der zuführenden Transporteinrichtung (3) und die Bewegungsabläufe des Manipulators (5) über die entsprechend ausgelegte und/oder mit entsprechenden Programmen ausgestattete Steuerungseinrichtung (15) gesteuert werden, **dadurch gekennzeichnet, dass**
- die Steuerungseinrichtung (15) Informationen zu den zu bildenden Takten und zu deren Zielpositionen und/oder Zielausrichtungen zur Ausbildung der jeweils gewünschten palettierfähigen Lage besitzt, und
- wobei die Steuerungseinrichtung Informationen zu den jeweils abzugreifenden und zu positionierenden ersten Takten (11) oder zweiten Takten (12) enthält oder abgespeichert hat, sowie auch Informationen zum Bewegungsablauf und dazu korrespondierend dem jeweiligen Platzbedarf des Manipulators (5),
- wobei der Manipulator (5) jeweils Takte, umfassend mindestens ein Stückgut (2), erfasst und innerhalb des Gruppiermoduls (20) durch Drehen und/oder Verschieben und/oder Heben in eine Zielposition (P) und/oder Zielausrichtung entsprechend einer definierte Lagenanordnung der auszubildenden palettierfähigen Lage bringt,
- -wobei das Verfahren wenigstens einen Verfahrensschritt zur Ausbildung der jeweiligen palettierfähigen Lage vorsieht, bei dem der Manipulator (5) einen ersten Takt (11) umfassend mindestens ein Stückgut (2) der geschlossenen und/oder lückenlosen Formation (F) klemmend und/oder kraft- und/oder formschlüssig erfasst, von der geschlossenen und/oder lückenlosen Formation (F) räumlich abtrennt und in eine erste definierte relative Zielposition (P1) und/oder Zielausrichtung gegenüber nachfolgenden Stückgütern (2) der geschlossenen und/oder lückenlosen Formation (F) verbringt und
- -wobei das Verfahren wenigstens einen weiteren Verfahrensschritt zur Ausbildung der jeweiligen palettierfähigen Lage vorsieht, bei dem innerhalb des Gruppiermoduls (20) ein von den nachfolgenden Stückgütern (2) der geschlossenen und/oder lückenlosen Formation (F) beabstandeter zweiter Takt (12) umfassend mindestens ein Stückgut (2) ohne Mitwirkung des Manipulators (5) ausgebildet wird,
- und wobei nachfolgend der von der geschlossenen und/oder lückenlosen Formation (F) beabstandete zweite Takt (12) und/oder das wenigstens eine Stückgut (2) des zweiten Taktes (12) durch den Manipulator (5) erfasst und in eine zweite definierte relative Zielposition und/oder Zielausrichtung (P2) innerhalb des Gruppiermoduls (20) verbracht wird,
- wobei die Steuerungseinrichtung (15) reguliert, ob die Taktbildung vor dem Erfassen der Stückgüter (2) durch den Manipulator (5) vermittels einer Verzögerung der Grund-Zuführgeschwindigkeit (v3) der zuführenden Transporteinrichtung (3) oder aber beim Erfassen der Stückgüter (2) durch den Manipulator (5) erfolgt.

## Claims

1. A method for handling piece goods (2), articles, and/or packs for the purpose of forming palletisable layers that each consist of a plurality of piece goods (2), articles and/or packs,
- wherein the method provides a single- or multiple-row conveyance of the piece goods (2), articles, and/or packs by means of at least one transport device (3) in a transport direction (TR), in each case in closed and/or unspaced formation (F), to a grouping module (20) with at least one horizontal conveyor (6) as well as with at least one manipulator (5),
- wherein the transport device (3) has a basic feed speed (v3) in transport direction, and the horizontal conveyor (6) has a basic conveying speed (v6) in transport direction (TR), wherein the basic feed speed (v3) and the basic conveying speed (v6) are the same or synchronous,
- wherein the speeds (v3) of the feeding transport device (3) and the movement patterns of the manipulator (5) are controlled via a control device (15) that is appropriately configured and/or equipped with appropriate programs,
- wherein the manipulator (5) in each instance seizes cycles comprising at least one piece good (2), and brings them into a target position (P) and/or target alignment within the grouping module (20) by rotating and/or shifting and/or lifting them corresponding to a defined layer arrangement of the palletisable layer to be formed,
**characterised in that**
- the method provides at least one method step to form the particular palletisable layer, in which method step the manipulator (5) seizes a first cycle (11) comprising at least one piece good (2) in a clamping and/or force-locking and/or form-locking manner from the closed and/or unspaced formation (F), spatially separates it from the closed and/or unspaced formation (F), and moves it into a first defined relative target position (P1) and/or target alignment relative to subsequent piece goods (2) of the closed and/or unspaced formation (F), and
- the method provides at least one further method step to form the particular palletisable layer, in which method step a second cycle (12) comprising at least one piece good (2) and spaced apart from the subsequent piece goods (2) of the closed and/or unspaced formation (F) is formed within the grouping module (20) without the cooperation of the manipulator (5),
- and wherein the second cycle (12), which is spaced apart from the closed and/or unspaced formation (F), and/or the at least one piece good (2) of the second cycle (12) is subsequently seized by the manipulator (5), and is moved into a second defined relative target position and/or target alignment (P2) within the grouping module (20),
- wherein the control device (15) has information on the cycles to be formed and on their target positions and/or target alignments in order to form the particular desired palletisable layer, and
- wherein the control device (15) regulates whether the cycle formation is carried out before the piece goods (2) are seized by the manipulator (5) by means of a delay in the basic feed speed (v3) of the feeding transport device (3) or upon the piece goods (2) being seized by the manipulator (5).

2. The method according to claim 1, in which the manipulator (5) is moved at least briefly in transport direction (TR) at a speed (v5), which is greater than or equal to the basic conveying speed (v6) of the horizontal conveyor device (6), directly after seizing at least one piece good (2), article, and/or pack of the formation (F) or after seizing the second cycle (12) formed within the grouping module (20).

3. The method according to claim 2, in which a delay of the feeding transport device (3) and/or a reduction in the conveying speed (v3) of the feeding transport device (3) is/are carried out after a number of piece goods (2) subject to the layer pattern to be created has been fed.

4. The method according to one of the previous claims, in which the manipulator (5) and/or the at least one transport device are controlled and/or regulated by a control device (15).

5. The method according to claim 4, in which the control device (15) actuates an at least brief reduction in the transport speed (v3) of the transport device (3) in order to form a second cycle (12) within the grouping module (20), the second cycle (12) comprising at least one piece good (2).

6. The method according to claim 4 or 5, in which the control device (15) has information or has information stored on a grouping to be formed from a multitude of piece goods (2) for a palletisable layer, wherein the particular target positions (P) and/or target alignments of the piece goods (2) form a part of the information and assign a specific position and/or a relative orientation in the particular group to the particular at least one piece good (2).

7. The method according to one of the previous claims, in which the manipulator can seize piece goods (2) symmetrically or asymmetrically.

8. The method according to one of the previous claims, in which the piece goods (2) are fed in at least two rows, in particular via at least two transport devices (3), to a seizing range (4) of the at least one manipulator (5).

9. The method according to one of the previous claims, in which the piece goods (2) of a first cycle (11) or second cycle (12) seized by the manipulator (5) are delayed at least temporarily in a conveying speed in transport direction (TR) relative to the basic conveying speed (v6) of the horizontal conveyor (6) in transport direction.

10. An apparatus (10) for handling piece goods (2), articles, and/or packs for the purpose of forming palletisable layers that each consist of a plurality of piece goods (2), articles and/or packs, for carrying out a method according to one of the claims 1 to 9, wherein the apparatus (10) comprises a control device,
- wherein the method carried out with the apparatus (10) provides a single- or multiple-row conveyance of the piece goods (2), articles, and/or packs by means of at least one transport device (3) in a transport direction (TR), in each case in closed and/or unspaced formation (F), to a grouping module (20) with at least one horizontal conveyor (6) as well as with at least one manipulator (5),
- wherein the transport device (3) has a basic feed speed (v3) in transport direction, and the horizontal conveyor (6) has a basic conveying speed (v6) in transport direction (TR), wherein the basic feed speed (v3) and the basic conveying speed (v6) are the same or synchronous,
- wherein the speeds (v3) of the feeding transport device (3) and the movement patterns of the manipulator (5) are controlled via the control device (15) that is appropriately configured and/or equipped with appropriate programs, **characterised in that**
- the control device (15) has information on the cycles to be formed and on their target positions and/or target alignments in order to form the particular desired palletisable layer, and
- wherein the control device contains information or has information stored on the particular first cycles (11) or second cycles (12) to be gripped and positioned, as well as information on the movement pattern and the corresponding particular space requirement of the manipulator (5),
- wherein the manipulator (5) in each instance seizes cycles comprising at least one piece good (2), and brings them into a target position (P) and/or target alignment within the grouping module (20) by rotating and/or shifting and/or lifting them corresponding to a defined layer arrangement of the palletisable layer to be formed,
- wherein the method provides at least one method step to form the particular palletisable layer, in which method step the manipulator (5) seizes a first cycle (11) comprising at least one piece good (2) in a clamping and/or force-locking and/or form-locking manner from the closed and/or unspaced formation (F), spatially separates it from the closed and/or unspaced formation (F), and moves it into a first defined relative target position (P1) and/or target alignment relative to subsequent piece goods (2) of the closed and/or unspaced formation (F), and
- wherein the method provides at least one further method step to form the particular palletisable layer, in which method step a second cycle (12) comprising at least one piece good (2) and spaced apart from the subsequent piece goods (2) of the closed and/or unspaced formation (F) is formed within the grouping module (20) without the cooperation of the manipulator (5),
- and wherein the second cycle (12), which is spaced apart from the closed and/or unspaced formation (F), and/or the at least one piece good (2) of the second cycle (12) is subsequently seized by the manipulator (5), and is moved into a second defined relative target position and/or target alignment (P2) within the grouping module (20),
- wherein the control device (15) regulates whether the cycle formation is carried out before the piece goods (2) are seized by the manipulator (5) by means of a delay in the basic feed speed (v3) of the feeding transport device (3) or upon the piece goods (2) being seized by the manipulator (5).

## Revendications

1. Procédé de manipulation de produits de détail (2), d'articles et/ou de multipacks en vue de la formation de couches palettisables constituées chacune de plusieurs produits de détail (2), articles et/ou multipacks,
- dans lequel le procédé prévoit un transport en une ou plusieurs rangées des produits de détail (2), articles et/ou multipacks au moyen d'au moins un dispositif de transport (3) dans une direction de transport (TR) dans une formation (F) respectivement fermée et/ou ininterrompue vers un module de groupement (20) comprenant au moins un dispositif de transport horizontal (6) ainsi qu'au moins un manipulateur (5),
- dans lequel le dispositif de transport (3) présente une vitesse d'amenée de base (v3) dans la direction de transport (TR) et le dispositif de transport horizontal (6) présente une vitesse de transport de base (v6) dans la direction de transport (TR), dans lequel la vitesse d'amenée de base (v3) et la vitesse de transport de base (v6) sont identiques ou synchrones,
- dans lequel les vitesses (v3) du dispositif de transport (3) amenant et les séquences de mouvements du manipulateur (5) sont commandées par l'intermédiaire d'un dispositif de commande (15) conçu de manière correspondante et/ou équipé de programmes correspondants,
- dans lequel le manipulateur (5) saisit respectivement des cadences, comprenant au moins un produit de détail (2), et amène celles-ci au sein du module de groupement (20) par rotation et/ou déplacement et/ou soulèvement dans une position cible (P) et/ou une orientation cible selon une disposition de couches définie de la couche palettisable à former,
**caractérisé par le fait que**
- le procédé prévoit au moins une étape de procédé pour former la couche palettisable respective, dans laquelle le manipulateur (5) saisit par serrage et/ou par adhérence et/ou à engagement positif une première cadence (11) comprenant au moins un produit de détail (2) de la formation fermée et/ou ininterrompue (F), sépare celle-ci spatialement de la formation fermée et/ou ininterrompue (F) et amène celle-ci dans une première position cible (P1) et/ou orientation cible relative(s) définie(s) par rapport à des produits de détail (2) suivants de la formation fermée et/ou ininterrompue (F), et
- dans lequel le procédé prévoit au moins une autre étape de procédé pour former la couche palettisable respective, dans laquelle une deuxième cadence (12) comprenant au moins un produit de détail (2) et espacée des produits de détails (2) suivants de la formation fermée et/ou ininterrompue (F) est formée sans l'intervention du manipulateur (5) au sein du module de groupement (20),
- et dans lequel ensuite la deuxième cadence (12) espacée de la formation fermée et/ou ininterrompue (F) et/ou ledit au moins un produit de détail (2) de la deuxième cadence (12) est saisi(e) par le manipulateur (5) et est amené(e) dans une deuxième position cible et/ou orientation cible (P2) relative(s) définie(s) au sein du module de groupement (20),
- dans lequel le dispositif de commande (15) dispose d'informations relatives aux cadences à former et à leurs positions cibles et/ou orientations cibles pour former la couche palettisable respectivement souhaitée, et
- dans lequel le dispositif de commande (15) règle si la formation de cadence se fait avant que les produits de détail (2) ne soient saisis par le manipulateur (5) au moyen d'un retard de la vitesse d'amenée de base (v3) du dispositif de transport (3) amenant ou bien lorsque les produits de détail (2) sont saisis par le manipulateur (5).

2. Procédé selon la revendication 1, dans lequel, directement après la saisie d'au moins un produit de détail (2), article et/ou multipack de la formation (F) ou après la saisie de la deuxième cadence (12) formée au sein du module de groupement (20), le manipulateur (5) est déplacé au moins brièvement à une vitesse (v5) dans la direction de transport (TR), qui est supérieure ou égale à la vitesse de transport de base (v6) du dispositif de transport horizontal (6).

3. Procédé selon la revendication 2, dans lequel un retard du dispositif de transport (3) amenant et/ou une réduction de la vitesse de transport (v3) du dispositif de transport (3) amenant se fait/se font après avoir amené un nombre de produits de détail (2) qui est fonction du schéma de couches à créer.

4. Procédé selon l'une quelconque des revendications précédentes, dans lequel le manipulateur (5) et/ou ledit au moins un dispositif de transport sont commandés et/ou réglés par un dispositif de commande (15).

5. Procédé selon la revendication 4, dans lequel, pour former une deuxième cadence (12), ladite deuxième cadence (12) comprenant au moins un produit de détail (2), le dispositif de commande (15) commande au sein du module de groupement (20) une réduction au moins à court terme de la vitesse de transport (v3) du dispositif de transport (3).

6. Procédé selon la revendication 4 ou 5, dans lequel le dispositif de commande (15) comprend ou bien stocke des informations relatives à un groupement à former à partir d'une pluralité de produits de détail (2), pour une couche palettisable, dans lequel les positions cibles (P) et/ou des orientations cibles respectives des produits de détail (2) forment une partie des informations et associent une position déterminée et/ou une orientation relative dans le groupement respectif audit au moins un produit de détail (2) respectif.

7. Procédé selon l'une quelconque des revendications précédentes, dans lequel le manipulateur peut saisir de manière symétrique ou asymétrique des produits de détail (2).

8. Procédé selon l'une quelconque des revendications précédentes, dans lequel les produits de détail (2) sont amenés en au moins deux rangées, en particulier par l'intermédiaire d'au moins deux dispositifs de transport (3), à une zone de saisie (4) dudit au moins un manipulateur (5).

9. Procédé selon l'une quelconque des revendications précédentes, dans lequel les produits de détail (2) d'une première cadence (11) ou d'une deuxième cadence (12) saisie par le manipulateur (5) sont retardés au moins temporairement à une vitesse de transport dans la direction de transport (TR) par rapport à la vitesse de transport de base (v6) du dispositif de transport horizontal (6) dans la direction de transport.

10. Dispositif de manipulation de produits de détail (2), d'articles et/ou de multipacks en vue de la formation de couches palettisables constituées chacune de plusieurs produits de détail (2), articles et/ou multipacks, destiné à mettre en œuvre un procédé selon l'une quelconque des revendications 1 à 9, dans lequel le dispositif (10) comprend un dispositif de commande, dans lequel
- le procédé mis en œuvre au moyen du dispositif (10) prévoit un transport en une ou plusieurs rangées des produits de détail (2), articles et/ou multipacks au moyen d'au moins un dispositif de transport (3) dans une direction de transport (TR) dans une formation (F) respectivement fermée et/ou ininterrompue vers un module de groupement (20) comprenant au moins un dispositif de transport horizontal (6) ainsi qu'au moins un manipulateur (5),
- dans lequel le dispositif de transport (3) présente une vitesse d'amenée de base (v3) dans la direction de transport et le dispositif de transport horizontal (6) présente une vitesse de transport de base (v6) dans la direction de transport (TR), dans lequel la vitesse d'amenée de base (v3) et la vitesse de transport de base (v6) sont identiques ou synchrones,
- dans lequel les vitesses (v3) du dispositif de transport (3) amenant et les séquences de mouvements du manipulateur (5) sont commandées par l'intermédiaire du dispositif de commande (15) conçu de manière correspondante et/ou équipé de programmes correspondants,
**caractérisé par le fait que**
- le dispositif de commande (15) dispose d'informations relatives aux cadences à former et à leurs positions cibles et/ou orientations cibles pour former la couche palettisable respectivement souhaitée, et
- dans lequel le dispositif de commande contient ou a stocké des informations relatives aux premières cadences (11) ou aux deuxièmes cadences (12) à saisir et à positionner respectivement, ainsi que des informations relatives à la séquence de mouvements et, de manière correspondante à celle-ci, à l'encombrement respectif du manipulateur (5),
- dans lequel le manipulateur (5) saisit respectivement des cadences, comprenant au moins un produit de détail (2), et amène celles-ci au sein du module de groupement (20) par rotation et/ou déplacement et/ou soulèvement dans une position cible (P) et/ou une orientation cible selon une disposition de couches définie de la couche palettisable à former,
- dans lequel le procédé prévoit au moins une étape de procédé pour former la couche palettisable respective, dans laquelle le manipulateur (5) saisit par serrage et/ou par adhérence et/ou à engagement positif une première cadence (11) comprenant au moins un produit de détail (2) de la formation fermée et/ou ininterrompue (F), sépare celle-ci spatialement de la formation fermée et/ou ininterrompue (F) et amène celle-ci dans une première position cible (P1) et/ou orientation cible relative(s) définie(s) par rapport à des produits de détail (2) suivants de la formation fermée et/ou ininterrompue (F), et
- dans lequel le procédé prévoit au moins une autre étape de procédé pour former la couche palettisable respective, dans laquelle une deuxième cadence (12) comprenant au moins un produit de détail (2) et espacée des produits de détails (2) suivants de la formation fermée et/ou ininterrompue (F) est formée sans l'intervention du manipulateur (5) au sein du module de groupement (20),
- et dans lequel ensuite la deuxième cadence (12) espacée de la formation fermée et/ou ininterrompue (F) et/ou ledit au moins un produit de détail (2) de la deuxième cadence (12) est saisi(e) par le manipulateur (5) et est amené(e) dans une deuxième position cible et/ou orientation cible (P2) relative(s) définie(s) au sein du module de groupement (20),
- dans lequel le dispositif de commande (15) règle si la formation de cadence se fait avant que les produits de détail (2) ne soient saisis par le manipulateur (5) au moyen d'un retard de la vitesse d'amenée de base (v3) du dispositif de transport (3) amenant ou bien lorsque les produits de détail (2) sont saisis par le manipulateur (5).
